# EUROPÄISCHE PATENTSCHRIFT

(11) **EP 1 517 776 B1**
(45) Veröffentlichungstag und Bekanntmachung des Hinweises auf die Patenterteilung: **19.04.2006**
(21) Anmeldenummer: 03740094.2
(22) Anmeldetag: 16.06.2003
(51) Int. Cl.: B29C 45/00, F16K 27/02

(54) **VERFAHREN ZUR HERSTELLUNG EINER DROSSELKLAPPE IN EINEM DURCHGEHENDEN DROSSELKLAPPENSTUTZEN DURCH SPRITZGIESSEN VON KUNSTSTOFF**
METHOD FOR PRODUCING A THROTTLE VALVE IN A CONTINUOUS THROTTLE BODY BY PLASTIC INJECTION MOLDING
PROCEDE DE FABRICATION D'UN PAPILLON DANS UN CORPS DE PAPILLON CONTINU PAR MOULAGE PAR INJECTION DE MATIERE PLASTIQUE

(30) Priorität: 02.07.2002 DE 10229641
(43) Veröffentlichungstag der Anmeldung: 30.03.2005
(73) Patentinhaber: SIEMENS AKTIENGESELLSCHAFT, 80333 München (DE)
(72) Erfinder: VOLZ, Peter, 65812 Bad Soden (DE)
(86) Internationale Anmeldenummer: PCT/DE2003/002018
(87) Internationale Veröffentlichungsnummer: WO 2004/005000

(56) Entgegenhaltungen:
- EP-B- 0 778 927
- WO-A-97/04259
- DE-A- 3 123 146
- DE-A- 4 323 078
- DE-A- 19 510 493
- DE-C- 10 018 627
- FR-A- 2 687 601
- US-A- 5 275 375
- US-A- 5 715 782
- PATENT ABSTRACTS OF JAPAN vol. 1999, no. 13, 30. November 1999 (1999-11-30) -& JP 11 229909 A (NISSAN MOTOR CO LTD), 24. August 1999 (1999-08-24) & DATABASE WPI Derwent Publications Ltd., London, GB; AN 1999-523503
- PATENT ABSTRACTS OF JAPAN vol. 2000, no. 01, 31. Januar 2000 (2000-01-31) & JP 11 294201 A (MITSUBISHI ENG PLAST CORP;NISSAN MOTOR CO LTD), 26. Oktober 1999 (1999-10-26)
- PATENT ABSTRACTS OF JAPAN vol. 008, no. 240 (M-336), 6. November 1984 (1984-11-06) & JP 59 120433 A (MITSUI FLUORO CHEMICAL KK), 12. Juli 1984 (1984-07-12)

## Beschreibung

Die vorliegende Erfindung betrifft ein Verfahren nach dem Oberbegriff des Anspruchs 1.

Drosselklappen in Drosselklappestutzen sind bekannt. In der DE 195 12 729 A1 wird ein Drosselklappenstutzen mit einem rohrartigen Gehäuse beschrieben, in dem eine Drosselklappe auf einer Drosselklappenwelle befestigt ist, die quer zur Längsachse des rohrartigen Gehäuses an ihren freien Enden durch Ausnehmungen in der Gehäusewand durchführend drehbar gelagert ist. Bei der Anordnung von Drosselklappen in Drosselklappenstutzen ist oftmals nachteilig, dass aufgrund von teilweise extrem kleinen Leckage-Vorgaben mit hoher Präzision und Oberflächengüte gearbeitet werden muss. Dabei müssen das Gussmaterial, aus dem der Drosselklappenstutzen besteht, und die Gussqualität einen hohen Qualitätsstandard haben. Die Drosselklappe wird dabei in der Regel aus einem Blech gestanzt und mit großem Präzisionsaufwand feinst gedreht, wobei sehr geringe Toleranzen eingehalten werden müssen.

In der WO 97 04259 A und der FR-A-2 667 601 werden Verfahren der eingangs erwähnten Art beschrieben, in dem bei der gemeinsamen Herstellung von Drosselklappe und Drosselklappenstutzen mittels Zwei-Komponenten-Spritzguß jeweils Kunststoffzapfen an die Drosselklappe angeformt werden. Dabei ergibt sich ein kritischer Übergangsbereich zwischen dem Umfang der Drosselklappe und den Kunststoffzapfen, in dem die geforderten sehr geringen Toleranzen für den Spalt zwischen Drosselklappe und Drosselklappenstutzen schwerlich eingehalten werden können.

Demgemäß liegt der Erfindung die Aufgabe zugrunde, ein Verfahren zur Herstellung einer Drosselklappe in einem Drosselklappenstutzen zu schaffen, bei dem die Toleranzanforderungen an das Spaltmaß zwischen Drosselklappe und Drosselklappenstutzen leichter einzuhalten sind.

Die der Erfindung zugrunde liegende Aufgabe wird durch ein Verfahren der eingangs beschriebenen Art gelöst, bei dem der mindestens eine Durchbruch vor dem Eingeben des zweiten Kunststoffes komplementär zu dem Drosselklappenstutzen verschlossen wird, wobei der an der Stelle des mindestens einen Durchbruchs nicht vorhandene umlaufende Vorsprung ergänzt wird, nach dem Entfernen des ersten Stempels und des zweiten Stempels aus dem Drosselklappenstutzen mindestens eine Drosselklappenwelle senkrecht zur Längsachse des Drosselklappenstutzens durch den Durchbruch eingebracht und die Drosselklappe an der mindestens einen Drosselklappenwelle befestigt wird.

In einer besonders bevorzugten Ausführungsform der Erfindung ist vorgesehen, daß in einem vorangehenden Verfahrensschritt in einem durchgehenden Drosselklappenstutzen, der bereits mit dem mindestens einen Durchbruch versehen ist, eine umlaufende, beispielsweise ringförmige Nut eingearbeitet wird, anschließend von beiden Seiten ein dritter Stempel und ein vierter Stempel in diesen Drosselklappenstutzen eingefahren werden, die zueinander komplementär gestaltet sind und im eingefahrenen Zustand im Bereich der ringförmigen Nut einen zylindrischen Hohlraum bilden, der zur Mitte des Drosselklappenstutzens einen umlaufenden Vorsprung aufweist, anschließend seitlich durch den Durchbruch der erste Kunststoff in aufgeschmolzener Form in den zylindrischen Hohlraum eingegeben und dort zur Aushärtung und Bildung eines Kunststoffeinsatzes mit dem zur Mitte des Drosselklappenstutzens verlaufenden, umlaufenden Vorsprung gebracht wird.

Der Drosselklappenstutzen kann beispielsweise aus Aludruckguss bestehen. Die in den Drosselklappenstutzen eingearbeitete umlaufende, ringförmige Nut kann einseitig oder zweiseitig parallel zur Längsachse des Drosselklappenstutzens begrenzt sein.

Der Drosselklappenstutzen kann auch vollständig aus dem ersten Kunststoff gefertigt sein. In diesem Fall kann in besonders vorteilhafter Weise auf die Bildung des Kunststoffeinsatzes 10 verzichtet werden.

Der erste Stempel, der zweite Stempel, der dritte Stempel sowie der vierte Stempel bestehen aus Stahl. Der dritte Stempel und der vierte Stempel sind zueinander komplementär gestaltet. Das bedeutet, sie wirken funktionell zusammen und bilden gemeinsam den zylindrischen Hohlraum, wobei der umlaufende Vorsprung dieses zylindrischen Hohlraums durch ihre im eingefahrenen Zustand anliegenden Stirnflächen durch dortige Materialwegnahme gebildet wird. Der umlaufende Vorsprung kann ringförmig sein. Der erste Kunststoff unterscheidet sich vom zweiten Kunststoff durch sein Schrumpfungsvermögen während der Abkühlungsphase. Dadurch wird erreicht, dass sich zwischen der hergestellten Drosselklappe und dem Drosselklappenstutzen ein geringfügiger Spalt bildet, so dass die Drosselklappe sich nicht mit dem Drosselklappenstutzen bzw. Kunststoffeinsatz verbinden kann. Vor dem Einbringen des zweiten Kunststoffs wird der mindestens eine Durchbruch des Drosselklappenstutzens komplementär zum Drosselklappenstutzen bzw. Kunststoffeinsatz verschlossen. Dabei werden Stopfen in die Öffnungen eingefahren, die auch im im Bereich der Öffnungen ggf. den zur Mitte des Drosselklappenstutzens verlaufenden, umlaufenden Vorsprung des Kunststoffeinsatzes bzw. des Drosselklappenstutzens, der an der Stelle der Öffnungen ggf. nicht mehr vorhanden ist, ergänzen. Die nach der Bildung der Drosselklappe anzuordnende mindestens eine Drosselklappenwelle wird in der Regel einteilig oder zweiteilig ausgestaltet sein. Ist sie zweiteilig ausgestaltet, so erfolgt die Verbindung der Drosselklappe mit der zweiteiligen Drosselklappenwelle über ein Verbindungselement, das halbschalenfbrmig ausgestaltet ist, beispielsweise über eine Schraub- oder Nietverbindung. Die Eingabe des zweiten Kunststoffs in den Drosselklappenstutzen erfolgt in der Regel über eine mittig durch den ersten Stempel verlaufende Bohrung.

Es hat sich in überraschender Weise gezeigt, dass bei dem Verfahren zur Herstellung einer Drosselklappe in einem durchgehenden Drosselklappenstutzen keinerlei Drehvorgänge erforderlich sind, bei denen die Einstellung von geringen Toleranzen erfolgt. Das technische Zusammenspiel zwischen Drosselklappe und Kunststoffeinsatz im Drosselklappenstutzen wird alleine durch die zwei Spritzvorgänge im durchgehenden Drosselklappenstutzen realisiert, so dass aufwendige Nachbearbeitungsschritte entfallen können.

Eine bevorzugte Ausgestaltung der Erfindung besteht darin, dass der umlaufende Vorsprung des Drosselklappenstutzens nicht durchgehend im gleichen Abstand zu den Kanten des Drosselklappenstutzens gebildet wird und der maximale Winkel α zwischen der Senkrechten zur Längsachse des Drosselklappenstutzens und der direkten Verbindung zweier direkt einander gegenüberliegender Bereiche des umlaufenden Vorsprungs dabei zwischen 7° und 8° liegt. Auf diese Weise wird die in der Regel gewünschte schräge Position der Drosselklappe im durchgehenden Drosselklappenstutzen auf einfache Weise erreicht. Die Stirnflächen des dritten Stempels und des vierten Stempels sind dabei komplementär schräg verlaufend ausgebildet.

Gemäß einer weiteren bevorzugten Ausgestaltung der Erfindung werden als erster Kunststoff und als zweiter Kunststoff Polyphenylensulfide (PPS) mit unterschiedlichen linearen Ausdehnungskoeffizienten eingesetzt. Diese Polyphenylensulfide eignen sich in besonderem Maße aufgrund ihres Schrumpfverhaltens zur Herstellung der Drosselklappe.

Nach einer weiteren Ausgestaltung der Erfindung ist vorgesehen, daß als erster Kunststoff ein Polyphenylensulfid (PPS) mit einem linearen Ausdehnungskoeffizienten zwischen 90 und 250 °C von 36 · 10⁻⁶ und als zweiter Kunststoff ein Polyphenylensulfid (PPS) mit einem linearen Ausdehnungskoeffizienten zwischen 90 und 200 °C von 46 · 10⁻⁶ eingesetzt wird. Für den Einsatzzweck sind diese beiden Kunststoffarten in besonders vorteilhafter Weise geeignet

Eine weitere bevorzugte Ausgestaltung der Erfindung besteht darin, dass die Drosselklappe an der mindestens einen Drosselklappenwelle durch Lasern befestigt wird. Dabei ist vorteilhaft, dass die Drosselklappenwelle einteilig ausgeführt werden kann, wobei gleichzeitig die Befestigung ohne zusätzliche Elemente wie Schrauben oder Nieten wirkungsvoll erfolgen kann.

Die Erfindung wird nachfolgend anhand der Zeichnung (Fig. 1 bis Fig. 7, 8a), b)) naher und beispielhaft erläutert.
Fig. 1 zeigt den Drosselklappenstutzen mit dem gebildeten zylindrischen Hohlraum im Querschnitt.
Fig. 2 zeigt den Drosselklappenstutzen mit dem gebildeten Kunststoffeinsatz im Querschnitt.
Fig. 3 zeigt die dreidimensionale Darstellung eines Kunststoffeinsatzes zusammen mit der Drosselklappe.
Fig. 4 zeigt die dreidimensionale Darstellung des dritten Stempels und des vierten Stempels in fast eingefahrenem Zustand im Drosselklappenstutzen.
Fig. 5 zeigt eine Explosionsdarstellung gem. Fig. 4.
Fig. 6 zeigt eine dreidimensionale Darstellung des ersten und des zweiten Stempels im Drosselklappenstutzen im eingefahrenen Zustand.
Fig. 7 zeigt eine Explosionsdarstellung der Anordnung gem. Fig. 6 mit einem Verbindungselement.
Fig. 8a), b)zeigt die Draufsicht auf den Kunststoffeinsatz sowie den Kunststoffeinsatz im Querschnitt gem. Schnitt A - A.

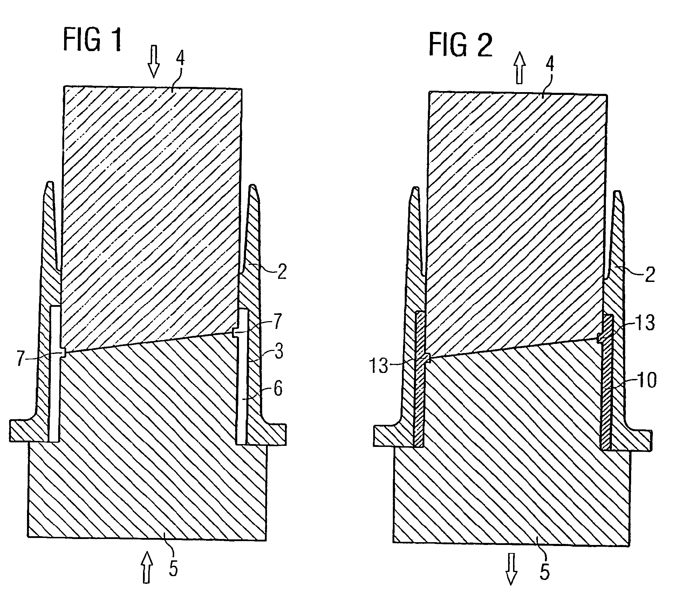

In Fig. 1 sind der Drosselklappenstutzen 2, der dritte Stempel 4 und der vierte Stempel 5, die bereits in den Drosselklappenstutzen 2 in Pfeilrichtung vollständig eingefahren sind, im Querschnitt dargestellt. Fig. 1 zeigt somit den Zustand des Verfahrens vor dem Einarbeiten der umlaufenden Nut gem. Anspruch 2. Der dritte Stempel 4 und der vierte Stempel 5 sind komplementär gestaltet. Das bedeutet, dass ihre Stirnflächen im eingefahrenen Zustand aneinander passend anliegen. Der Drosselklappenstutzen 2 weist eine umlaufende, ringförmige Nut 3 auf, die einseitig durch den Drosselklappenstutzen 2 parallel zur Längsachse des Drosselklappenstutzens 2 begrenzt ist. Der dritte Stempel 4 und der vierte Stempel 5 bilden im Bereich der ringförmigen Nut 3 einen zylindrischen Hohlraum 6, in den im anschließenden dritten Schritt seitlich durch mindestens einen Durchbruch (nicht dargestellt) des Drosselklappenstutzens 2 ein aufgeschmolzener erster. Kunststoff eingegeben wird. Dieser füllt dann den zylindrischen ersten Hohlraum 6, der zur Mitte des Drosselklappenstutzens 2 einen umlaufenden Vorsprung 7 aufweist, vollständig aus.

In Fig. 2 ist der Drosselklappenstutzen 2 mit dem dritten Stempel 4 und dem vierten Stempel 5 im Querschnitt dargestellt. Der erste Kunststoff ist bereits in den zylindrischen Hohlraum (nicht dargestellt) eingegeben und dort zur Aushärtung gebracht worden, wobei ein Kunststoffeinsatz 10 gebildet wird. Nach seiner Aushärtung werden der dritte Stempel 4 und der vierte Stempel 5 aus dem Drosselklappenstutzen 2 in Pfeilrichtung entfernt. Der Kunststoffeinsatz verbleibt dann im Drosselklappenstutzen 2 und weist einen zur Mitte des Drosselklappenstutzens 2 verlaufenden, umlaufenden Vorsprung 13 auf.

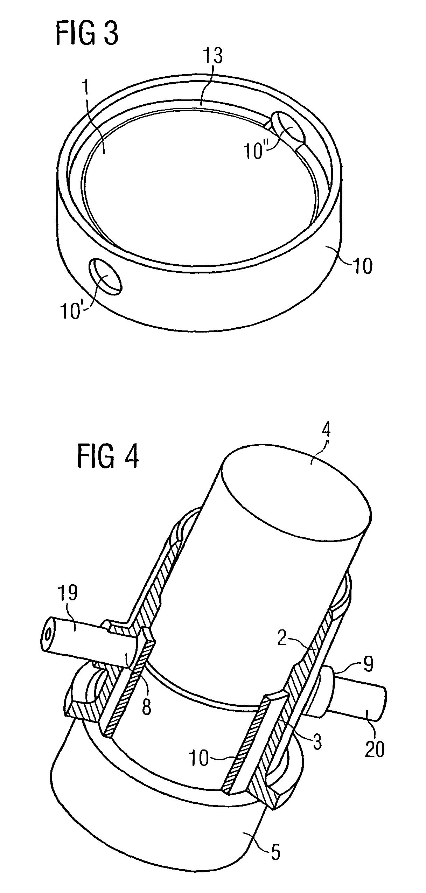

In Fig. 3 ist ein Kunststoffeinsatz 10 mit dem umlaufenden vorsprung 13 zusammen mit der Drosselklappe 1 vereinfacht dargestellt. Der Kunststoffeinsatz 10 weist eine erste Öffnung 10' sowie eine zweite Öffnung 10'' auf, die vor dem zweiten Spritzvorgang zur Bildung der Drosselklappe (nicht dargestellt) komplementär zum Kunststoffeinsatz verschlossen werden. Dies bedeutet, dass an den Stellen der ersten Öffnung 10' und der zweiten Öffnung 10'' der dort nicht vorhandene umlaufende Vorsprung 13 beispielsweise durch einzuführende Stopfen (nicht dargestellt) ergänzt wird.

In Fig. 4 sind der dritte Stempel 4 und der vierte Stempel 5 im Drosselklappenstutzen 2 in fast eingefahrenem Zustand dreidimensional dargestellt. Der Drosselklappenstutzen 2 weist zwei Durchbrüche B, 9 auf, durch welche eine erste Zufuhr 19 und eine zweite Zufuhr 20 für den ersten Kunststoff eingefahren sind. Sie dienen gleichzeitig zur Entlüftung des zylindrischen Hohlraums 6 (nicht dargestellt) beim ersten Spritzvorgang. Nachdem der dritte Stempel 4 und der vierte Stempel 5 in den Drosselklappenstutzen 2 eingefahren wurden, wird der erste Kunststoff über die erste Zufuhr 19 oder über die zweite Zufuhr 20 zur Bildung des Kunststoffeinsatzes 10 eingebracht. Nach Aushärtung des Kunststoffeinsatzes 10 werden der dritte Stempel 4 und der vierte Stempel 5 wieder aus dem Drosselklappenstutzen entfernt.

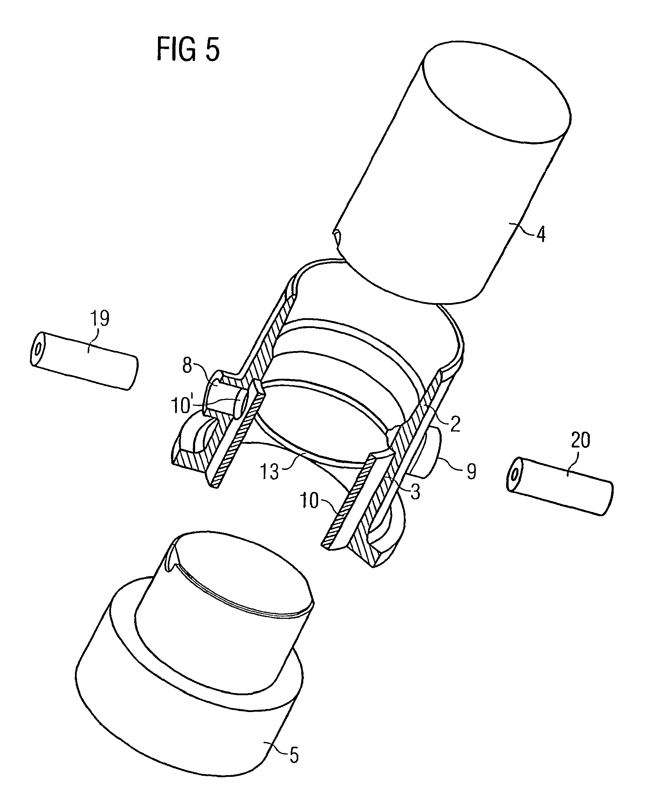

In Fig. 5 ist eine Explosionsdarstellung gemäß Fig. 4 dargestellt. Dabei ist lediglich der umlaufende Vorsprung 13 des Kunststoffeinsatzes 10 durchgehend verlaufend dargestellt worden.

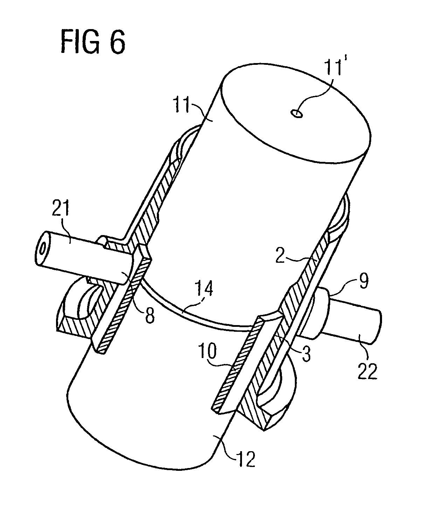

In Fig. 6 ist der Drosselklappenstutzen 2 zusammen mit dem ersten Stempel 11 und dem zweiten Stempel 12 im eingefahrenen Zustand dreidimensional dargestellt. Die erste Zufuhr und die zweite Zufuhr für den ersten Kunststoff (nicht dargestellt) sind inzwischen aus der Vorrichtung herausgefahren worden und wurden durch einen ersten Stopfen 21 und einen zweiten Stopfen 22 ersetzt, die die Durchbrüche 8, 9 des Drosselklappenstutzens 2 komplementär zum Kunststoffeinsatz 10 verschließen. Zwischen dem ersten Stempel 11 und dem zweiten Stempel 12 und dem gebildeten, zur Mitte des Drosselklappenstutzens 2 verlaufenden, umlaufenden Vorsprung (nicht dargestellt) des Kunststoffeinsatzes 10 wird ein drosselklappenförmiger Hohlraum 14 (nicht dargestellt) gebildet. Anschließend wird ein aufgeschmolzener zweiter Kunststoff durch den ersten Stempel 11 in den drosselklappenförmigen Hohlraum 14 eingegeben und dort zur Aushärtung und Bildung der Drosselklappe 1 gebracht. Die Eingabe des zweiten Kunststoffs in das Innere des Drosselklappenstutzens 2 erfolgt dabei durch eine mittig im ersten Stempel 11 angeordnete Bohrung 11', Nach Aushärtung der Drosselklappe (nicht dargestellt) werden der erste Stempel 11 und der zweite Stempel 12 aus dem Drosselklappenstutzen wieder herausgefahren.

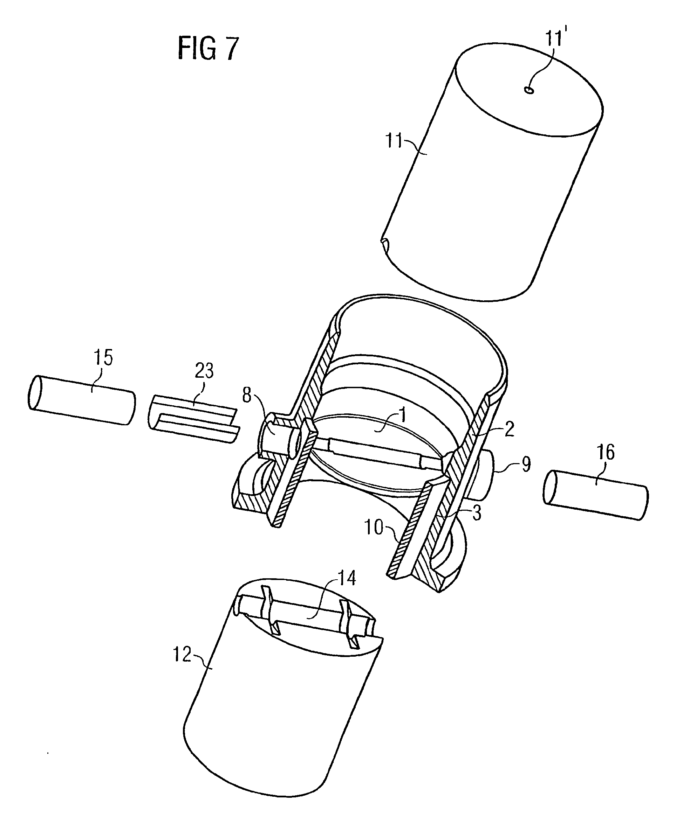

In Fig. 7 ist eine Explosionszeichnung gemäß Fig. 6 mit einem Verbindungselement 23 dargestellt. Eine zweiteilige Drosselklappenwelle 15, 16 wird senkrecht zur Längsachse des Drosselklappenstutzens 2 durch den Drosselklappenstutzen 2 und den den Kunststoffeinsatz 10 eingebracht und die Drosselklappe 1 an der zweiteiligen Drosselklappenwelle 15, 16 befestigt. Die zweiteilige Drosselklappenwelle 15, 16 wird dabei über das verbindungselement 23 fixiert. Die eigentliche Verbindung erfolgt in besonders vorteilhafter Weise durch Lasern.

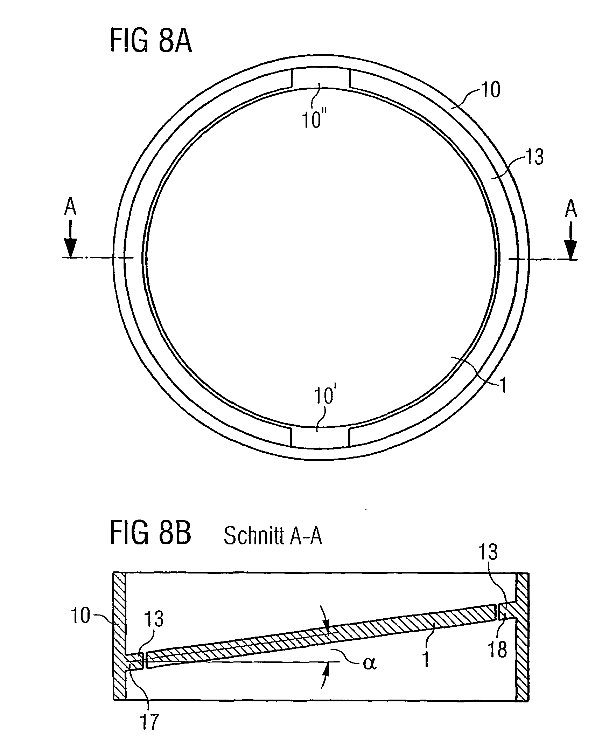

In Fig. 8a), b) ist de Draufsicht des Kunststoffeinsatzes 10 mit der Drosselklappe 1 sowie der Querschnitt gemäß Schnitt A - A schematisch und vereinfacht dargestellt. Der umlaufende Vorsprung 13 des Kunststoffeinsatzes 10 weist dabei nicht durchgehend den gleichen Abstand zu den Kanten des Kunststoffeinsatzes 10 auf. Der maximale Winkel α zwischen der Senkrechten zur Längsachse des Drosselklappenstutzens 2 (nicht dargestellt) und der direkten Verbindung zweier direkt gegenüberliegender Bereiche 17, 18 des umlaufenden Vorsprungs 13 liegt zwischen 7° und 8°. Dies entspricht in der Regel der gewünschten Neigung der Drosselklappe 1 im Drosselklappenstutzen.

## Patentansprüche

1. Verfahren zur Herstellung einer Drosselklappe (1) in einem durchgehenden, wenigstens teilweise aus einem ersten Kunststoff gefertigten Drosselklappenstutzen (2) mit einem zur Mitte des Drosselklappenstutzens (2) verlaufenden, umlaufenden Vorsprung (13) und mindestens einem Durchbruch (8, 9), wobei in den Drosselklappenstutzen (2) von beiden Seiten ein erster Stempel (11) und ein zweiter Stempel (12) eingefahren werden, so dass zwischen beiden Stempeln (11, 12) und dem Vorsprung (13) ein drosselklappenförmiger Hohlraum (14) gebildet wird, ein aufgeschmolzener zweiter Kunststoff durch den ersten Stempel (11) in den drosselklappenförmigen Hohlraum (14) eingegeben und dort zur Aushärtung und Bildung der Drosselklappen (1) gebracht wird sowie anschließend der erste Stempel (11) und der zweite Stempel (12) aus dem Drosselklappenstutzen (2) entfernt werden,
**dadurch gekennzeichnet, dass**
der mindestens eine Durchbruch (8, 9) vor dem Eingeben des zweiten Kunststoffes komplementär zum Drosselklappenstutzen (2) verschlossen wird, wobei der an der Stelle des mindestens einen Durchbruchs (8, 9) nicht vorhandene umlaufende Vorsprung (13) ergänzt wird, nach dem Entfernen des ersten Stempels (11) und des zweiten Stempels (12) aus dem Drosselklappenstutzen (2) mindestens eine Drosselklappenwelle (15, 16) senkrecht zur Längsachse des Drosselklappenstutzens (2) durch den Durchbruch (8, 9) eingebracht und die Drosselklappe (1) an der mindestens einen Drosselklappenwelle (15, 16) befestigt wird.

2. Verfahren nach Anspruch 1, bei dem in einem vorangehenden Verfahrensschritt in einem durchgehenden Drosselklappenstutzen (2), der bereits mit dem mindestens einen Durchbruch (8, 9) versehen ist, eine umlaufende, ringförmige Nut (3) eingearbeitet wird, anschließend von beiden Seiten ein dritter Stempel (4) und ein vierter Stempel (5) in diesen Drosselklappenstutzen (2) eingefahren werden, die zueinander komplementär gestaltet sind und im eingefahrenen Zustand im Bereich der ringförmigen Nut (3) einen zylindrischen Hohlraum (6) bilden, der zur Mitte des Drosselklappestutzens (2) einen umlaufenden Vorsprung (7) aufweist, anschließend seitlich durch den Durchbruch (8, 9) der erste Kunststoff in aufgeschmolzener Form in den zylindrischen Hohlraum (6) eingegeben und dort zur Aushärtung und Bildung eines Kunststoffeinsatzes (10) mit dem zur Mitte des Drosselklappenstutzens (2) verlaufenden, umlaufenden Vorsprung (13) gebracht wird.

3. Verfahren nach Anspruch 1 oder 2, bei dem der umlaufende vorsprung (13) des Drosselklappenstutzens (2) nicht durchgehend im gleichen Abstand zu den Kanten des Drosselklappenstutzens (2) gebildet wird und der maximale Winkel α zwischen der Senkrechten zur Längsachse des Drosselklappenstutzens (2) und der direkten Verbindung zweier direkt einander gegenüberliegender Bereiche (17, 18) des umlaufenden vorsprungs (13) dabei zwischen 7° und 8° liegt.

4. Verfahren nach einem der vorhergehenden Ansprüche, bei dem als erster Kunststoff und als zweiter Kunststoff Polyphenylensulfide (PPS) mit unterschiedlichen linearen Ausdehnungskoeffizienten eingesetzt werden.

5. Verfahren nach Anspruch 4, bei dem als erster Kunststoff ein Polyphenylensulfid (PPS) mit einem linearen Ausdehnungskoeffizienten zwischen 90 und 200 °C von 36 · 10⁻⁶ und als zweiter Kunststoff ein Polyphenylensulfid (PES) mit einem linearen Ausdehnungskoeffizienten zwischen 90 und 250 °c von 46 · 10⁻⁶ eingesetzt wird.

6. Verfahren nach einem der vorhergehenden Ansprüche, bei dem die Drosselklappe (1) an der mindestens einen Drosselklappenwelle (15, 16) durch Lasern befestigt wird.

## Claims

1. Method for producing a throttle valve (1) in a continuous throttle valve body (2) made at least partially from a first plastic, having a peripheral projection (13) running to the centre of the throttle valve body (2), and at least one aperture (8, 9), a first die (11) and a second die (12) being introduced into the throttle valve body (2) from both sides, so that a throttle valve-shaped cavity (14) is formed between the two dies (11, 12) and the projection (13), the first die (11) introducing a molten second plastic into the throttle valve-shaped cavity (14) where it is made to cure for the formation of the throttle valve (1), before the first die (11) and the second die (12) are removed from the throttle valve body (2), **characterized in that** at least one aperture (8, 9) is closed in a manner complementary to the throttle valve body (2) before the introduction of the second plastic, the peripheral projection (13) missing at the site of at least one aperture (8, 9) being made up, and at least one throttle valve shaft (15, 16) being introduced through the aperture (8, 9) perpendicular to the longitudinal axis of the throttle valve body (2) following removal of the first die (11) and the second die (12) from the throttle valve body (2), before the throttle valve (1) is fixed to at least one throttle valve shaft (15, 16).

2. Method according to Claim 1, **characterized in that** in a preceding step of the method a peripheral annular groove (3) is machined in a continuous throttle valve body (2), which has already been provided with at least one aperture (8, 9), before a third die (4) and a fourth die (5) are introduced into this throttle valve body (2) from both sides, which dies are of a complementary shape to one another and when introduced in the area of the annular groove (3) form a cylindrical cavity (6), which has a peripheral projection (7) to the centre of the throttle valve body (2), before the first plastic in molten form is introduced laterally through the aperture (8, 9) into the cylindrical cavity (6), where it is made to cure forming a plastic insert (10) with the peripheral projection (13) running to the centre of the throttle valve body (2).

3. Method according to Claim 1 or 2, **characterized in that** the peripheral projection (13) of the throttle valve body (2) is not formed continuously at the same distance from the edges of the throttle valve body (2) and the maximum angle α between the perpendicular to the longitudinal axis of the throttle valve body (2) and the direct connection of two directly opposing areas (17, 18) of the peripheral projection (13) in this case lies between 7° and 8°.

4. Method according to any one of the preceding Claims, **characterized in that** polyphenylene sulphides (PPS) with different coefficients of linear expansion are used as the first plastic and as the second plastic.

5. Method according to Claim 4, **characterized in that** a polyphenylene sulphide (PPS) with a coefficient of linear expansion between 90 and 200°C of 36 · 10⁻⁶ is used as the first plastic and a polyphenylene sulphide (PPS) with a coefficient of linear expansion between 90 and 250°C of 46 · 10⁻⁶ is used as the second plastic.

6. Method according to any one of the preceding Claims, **characterized in that** the throttle valve (1) is fixed to at least one throttle valve shaft (15, 16) by means of lasers.

## Revendications

1. Procédé destiné à fabriquer un papillon de régulation des gaz(1) dans une tubulure (2) à papillon de régulation des gaz d'un seul tenant, qui est fabriquée au moins partiellement à partir d'une première matière plastique et qui comporte une saillie périphérique (13) dirigée vers le milieu de la tubulure (2) à papillon de régulation des gaz et au moins un trou (8, 9), procédé au cours duquel on engage, à partir des deux côtés, dans la tubulure (2) à papillon de régulation des gaz, un premier tampon (11) et un deuxième tampon (12), si bien qu'il se forme, entre les deux tampons (11, 12) et la saillie (13), un espace vide (14) ayant la forme d'un papillon de régulation des gaz, puis on introduit, dans l'espace vide (14) ayant la forme d'un papillon de régulation des gaz, une deuxième matière plastique en fusion à travers le premier tampon (11) et, là, on la laisse se solidifier en formant le papillon de régulation des gaz (1), et, ensuite, on enlève de la tubulure (2) à papillon de régulation des gaz le premier tampon (11) et le deuxième tampon (12),
**caractérisé par le fait**
**que** le au moins un trou (8, 9) est fermé, avant l'introduction de la deuxième matière plastique, d'une façon complémentaire par rapport à la tubulure (2) de papillon de régulation des gaz, la saillie périphérique (13), qui n'existe pas à l'endroit du au moins un trou (8, 9), étant, en même temps, complétée, que, une fois que le premier tampon (11) et le deuxième tampon (12) ont été enlevés de la tubulure (2) à papillon de régulation des gaz, au moins un arbre (15, 16) de papillon de régulation des gaz est introduit perpendiculairement à l'axe longitudinal de la tubulure (2) à papillon de régulation des gaz et à travers le trou (8, 9) et que le papillon (1) de régulation des gaz est fixé sur le au moins un arbre (15, 16) de papillon de régulation des gaz.

2. Procédé selon la revendication 1 au cours duquel, pendant une étape préliminaire du procédé, une rainure annulaire et périphérique (3) est ménagée dans une tubulure (2) à papillon de régulation des gaz d'un seul tenant, qui est déjà dotée du au moins un trou (8, 9), que, ensuite, à partir des deux côtés, un troisième tampon (4) et un quatrième tampon (5) sont engagés dans cette tubulure (2) à papillon de régulation des gaz, ces tampons étant complémentaires l'un par rapport à l'autre et formant, dans leur position introduite, dans la zone de la rainure annulaire (3), un espace cylindrique vide (6) comportant, dans la direction du milieu de la tubulure (2) à papillon de régulation des gaz, une saillie périphérique (7), ensuite la première matière plastique en fusion est introduite latéralement dans l'espace cylindrique vide (6) à travers le moins un trou (8, 9) et, là, on la laisse se solidifier en formant un insert (10) en matière plastique comportant la saillie périphérique (13) dirigée vers le milieu de la tubulure (2) à papillon de régulation des gaz.

3. Procédé selon la revendication 1 ou 2 au cours duquel la saillie périphérique (13) de la tubulure (2) à papillon de régulation des gaz n'est pas formée d'une façon continue à la même distance des arêtes de la tubulure (2) à papillon de régulation des gaz et l'angle maximum α entre la perpendiculaire à l'axe longitudinal de la tubulure (2) à papillon de régulation des gaz et la liaison directe de deux zones (17, 18) de la saillie périphérique (13) se faisant directement face a, dans ce cadre, une valeur comprise entre 7° et 8°.

4. Procédé selon l'une des revendications précédentes au cours duquel on utilise, comme première matière plastique et comme deuxième matière plastique, des polysulfures de phénylène (PPS) ayant des coefficients linéaires de dilatation différents.

5. Procédé selon la revendication 4 dans lequel on utilise, comme première matière plastique, un polysulfure de phénylène (PPS) ayant, entre 90 et 200°C, un coefficient linéaire de dilatation de 36.10⁻⁶ et, comme deuxième matière plastique, un polysulfure de phénylène (PPS) ayant, entre 90 et 250°C, un coefficient linéaire de dilatation de 46.10⁻⁶.

6. Procédé selon l'une des revendications précédentes au cours duquel le papillon (1) de régulation des gaz est fixé par faisceau laser sur le au moins un arbre (15, 16) de papillon de régulation des gaz.
